# EUROPEAN PATENT SPECIFICATION

(11) **EP 1 845 447 B1**
(45) Date of publication and mention of the grant of the patent: **02.09.2009**
(21) Application number: 07014916.6
(22) Date of filing: 17.02.2005
(51) Int. Cl.: G06F 11/00

(54) **Method, apparatus and software for preventing switch failures in the presence of faults**
Verfahren, Vorrichtung und Software zur Vermeidung von Schaltungsfehlern in Anwesenheit von Fehlern
Procédé, appareil et logiciel pour eviter des erreurs de commutation en presence d'erreurs

(30) Priority: 19.02.2004 US 782217
(43) Date of publication of application: 17.10.2007
(62) Divisional of application: 05250904.9
(73) Proprietor: Ericsson AB, 164 83 Stockholm (SE)
(72) Inventor: Nolish, Kevin, Pittsburgh Pennsylvania 15237 (US); Anderson, Drew, Pittsburgh Pennsylvania 15206 (US); Arner, Keith, Cranberry Township Pennsylvania 16066 (US)
(74) Representative: Rees, Simon John Lewis

(56) References cited:
- US-A- 5 453 737
- US-A1- 2003 126 497
- US-B1- 6 587 961

## Description

### FIELD OF THE INVENTION

The present invention is related to an electronic device having a master/slave bus interconnecting one or more bus master units with one or more bus slave units. More specifically, the present invention is related to a switch having a master/slave bus that automatically recovers from failures of one or more bus slave units based upon the operation of a software program.

US 5453737 discloses a master/slave communication and control system, with a master controller and a plurality of slave subsystems being connected through first and second independent serial data buses. In the event that a slave subsystem failure is detected, the master controller may "kill" that slave unit with an associated kill line.

US 6587961 discloses a bridge for a multi-processor system including bus interfaces for connection to an I/O bus of a first processing set, an I/O bus of a second processing set and a device bus. In an error mode, a bridge control mechanism prevents access by the processing sets to the device bus.

US 2003/0126497 discloses a method and system for recovering from a coupling facility failure.

### BACKGROUND OF THE INVENTION

Systems based, in part, upon Master/Slave shared bus systems are vulnerable to system failure in the presence of certain kinds of slave unit failures. Microsoft windows implements detection of these failures but does not have the ability to recover the system. The present invention allows systems to recover from these failures without special purpose redundancy and resiliency hardware support. The present invention, utilizing software modifications, renders switching systems invulnerable to system failure in the presence of hardware faults in slave units. This method requires no special hardware support.

### SUMMARY OF THE INVENTION

The present invention, which is defined in detail in the appended independent claims, pertains to a method for transferring data. The method comprises the steps of attempting to access a slave unit of a plurality of slave units of a switch by a master unit of the switch with a signal through a bus through which the master unit and the slave unit communicate; and detecting whether or not said slave unit is a failed slave unit. The method is characterized by the steps of: if said slave unit is a failed slave unit, causing the switch to abnormally terminate; and in response to the switch being caused to abnormally terminate, automatically recovering the switch from the failed slave unit with a software program in the switch that directs the master unit to avoid further accessing the failed slave unit of the plurality of slave units by storing status information relating to the failed slave unit in persistent storage that survives across abnormal termination of the switch, and thereafter preventing the master unit from attempting to access the failed slave unit.

The present invention further pertains to a computer-readable medium storing thereon computer-readable instructions for performing the method described above when said instructions are executed on a computer.

### BRIEF DESCRIPTION OF THE DRAWINGS

In the accompanying drawings, the preferred embodiment of the invention and preferred methods of practicing the invention are illustrated in which:
Figures 1A and 1B are flow charts of the present invention.
Figure 2 is a block diagram of a switch of the present invention.

### DETAILED DESCRIPTION

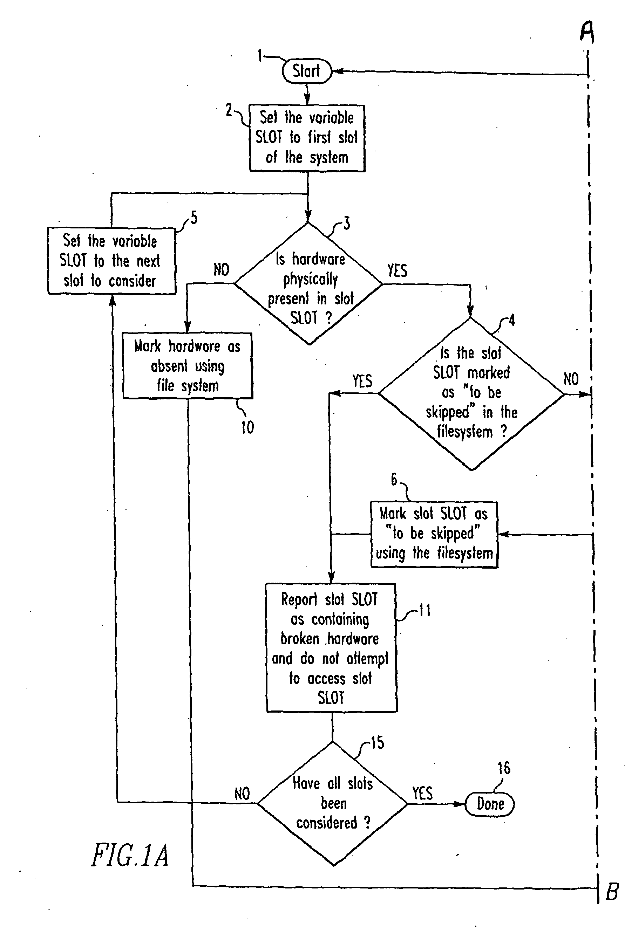

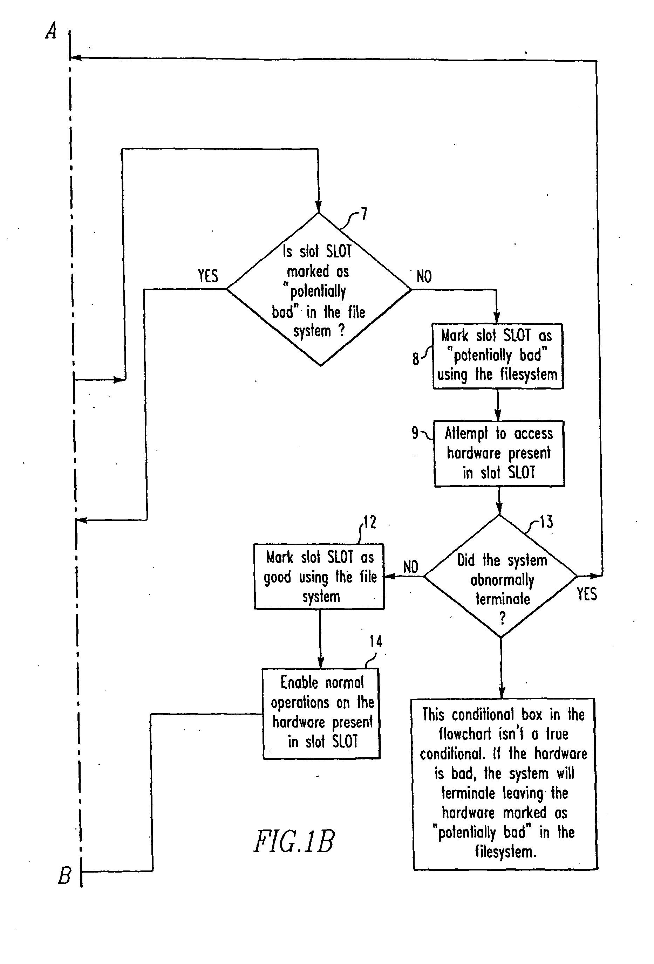

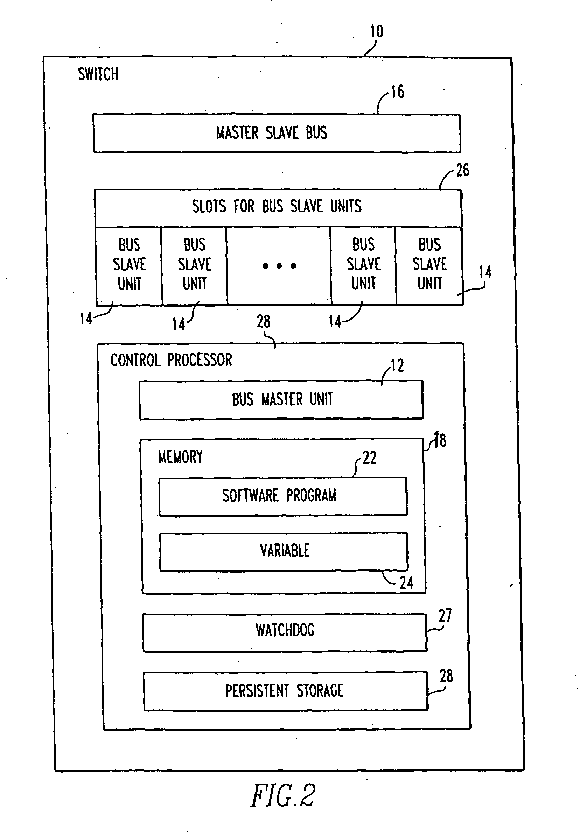

Referring now to the drawings wherein like reference numerals refer to similar or identical parts throughout the several views, and more specifically to figures 1A, 1B and 2 thereof, there is shown a switch 10 for transferring data. The switch 10 comprises at least one master unit 12. The switch 10 comprises a plurality of slave units 14. The switch 10 comprises a bus 16 through which the master unit 12 communicates with the slave units 14. The switch 10 comprises a memory 18 in communication with the master unit 12 having a software program 22 which causes the switch 10 to automatically recover when a slave unit 14 fails.

Preferably, the switch 10 includes persistent storage 20 that survives across abnormal termination of the switch 10. The switch 10 preferably includes a mechanism for detecting failures of the slave units 14 and thereupon causes the switch 10 to abnormally terminate. Preferably, the software program 22 causes the switch 10 to automatically recover when the detecting mechanism causes the switch 10 to abnormally terminate. The detecting mechanism preferably includes a hardware watchdog device 27.

The present invention pertains to a method for transferring data. The method comprises the steps of attempting to access a failed slave unit 14 of a plurality of slave units 14 of a switch 10 by a master unit 12 of the switch 10 with a signal through a bus 16 through which the master unit 12 and the failed slave unit 14 communicate. There is the step of automatically recovering the switch 10 from the failed slave unit 14 with a software program 22 in the switch 10 that directs the master unit 12 to avoid further accessing the failed slave unit 14 of the plurality of slavery units. Preferably, the recovering step includes the step of obtaining status information about the slave units 14 from persistent storage 20.

Referring to figures 1A and 1B, the present invention pertains to a software program 22. The software program 22 comprises the steps of identifying a first slave unit 14 of a plurality of slave units 14 of a switch 10 has failed when the first slave unit 14 is attempted to be accessed by a master unit 12 of the switch 10. The software program 22 comprises the step of preventing a master unit 12 from attempting to access the failed first slave unit 14.

Preferably, there is the step of determining the switch 10 abnormally terminated when the master unit 12 attempted to access the first slave unit 14. There is preferably the step of changing information in persistent storage associated with the first slave unit 14 from identified as failed to identified as good if the switch 10 does not terminate abnormally after the master unit 12 attempts to contact the slave unit 14. Preferably, there is the step of setting a variable slot 24 chosen from amongst a plurality of slots 26 of the switch 10 not marked as potentially bad. There is preferably the step of determining whether the first slave unit 14 is physically present in a first slot 26 of the plurality of slots 25.

Preferably, there is the step of determining the first slot 26 is marked to be skipped. Preferably, there is the step of marking the variable slot 24 as potentially bad if it is not marked potentially bad. Preferably, there is the step of reporting the variable slot 24 as containing broken hardware and preventing the master unit 12 from attempting to access the variable slot 24 if the variable slot 24 is marked to be skipped.

There is preferably the step of attempting to access hardware present in the variable slot 24 if the variable slot 24 is marked potentially bad. Preferably, there is the step of marking the variable slot 24 as good if the switch 10 did not abnormally terminate when the master unit 12 accessed the first slave unit 14. There is preferably the step of enabling normal operations on hardware present in the variable slot 24 if the variable slot 24 is marked as good. Preferably, there is the step of setting the variable slot 24 to a next slot 26 of the plurality of slots 26.

In the preferred embodiment, persistent information is stored in a persistent storage 20 device, like a file system. This information is used to track the state of a slave hardware unit if this slave unit 14 fails and causes the system to fail, the stored information is used subsequently to mark the hardware as suspect thus avoiding future hardware accesses to the failed slave unit 14 that may cause system failure. The attached flowchart illustrates this procedure in detail.

In the operation of the invention, the architecture of the switch is as follows.

### Switch

a. Master/Slave Bus
b. Plurality of slave units
c. Control Processor
   i. Memory
      1. having a software program
   ii. Watchdog
   iii. Persistent Storage
   iv. Master Unit

The switch 10 comprises one or more control processors. Each control processor element contains memory 18 having a software program 22 that controls the switch 10, a watchdog device capable of detecting certain kinds of failures and also capable of restarting the switch 10 should a failure be detected, persistent storage 20 that retains information across system restarts and across loss of power to the system, and a master unit 12 which can instigate communications over a master/slave bus 16 to one or more slave units 14. Each of these components will be discussed in further detail in the following paragraphs.

The master slave bus 16 is used to interconnect units in a hardware system. It consists of an electrical interconnection between the various units and protocols that describe how the signals transported across the electrical interconnection are to be used to facilitate communications between-the units attached to the bus 16.

Units attached to the bus 16 can be divided into two categories, master units 12 and slave units 14. Master units 12 are capable of initiating communications with other bus 16 units, while slave units 14 simply respond to communications initiated by the master units 12. A typical read transaction over the bus 16 starts with a master unit 12 making a request for information from a slave unit 14. The slave unit 14 accepts the requests, does whatever processing it needs to do locally to generate the information, and then returns the requested information and then the slave unit 14 signals that it has completed the transaction. A typical write request starts with the master unit 12 sending a write request to a slave unit 14 along with the data to be written. The slave unit 14 acknowledges the transaction, does whatever local processing is needed to process the write request, and then acknowledges the completion of the transaction.

The control processor subsystem manages the normal operation of the system and also contains a software algorithm that recovers the system automatically in the event of slave unit 14 failure. The control processor subsystem also contains memory 18 to hold the program and variables used by the program to help manage and recover the system. It also contains persistent storage 20 so that information may be retained across system restart events or system power down events. Finally, the control processor system has a watchdog mechanism. The purpose of the watchdog is to detect and recover from certain kinds of failures in the system.

Generally, a watchdog device operates by monitoring another device for activity. If the monitored device is inactive for too long a period, then it performs some action to recover the system. In the ASX-4000, the watchdog monitors the control processor's instruction fetch state. If the control processor stops accessing instructions for a long enough time period, the ASX-4000 watchdog resets the control processor subsystem, which instigates a system restart event.

Referring to figures 1A and 1B, numbers within this text refer to specific boxes in the flow charts of figures 1A and 1B describing the software program. The text is organized as a walkthrough of the flow charts.

In the preferred embodiment, the present invention is implemented in Marconi's ASX-4000 switch 10 product. The ASX-4000 without the invention has been publicly available for purchase from before the filing date hereof. In this particular switch 10, the master-slave bus 16 connects the control processor to each of the slots 26 in the system. Each slot 26, when occupied, contains a slave device that is accessed by the control processor. The control processor acts as the master in the system. The key operational requirement of the control processor is that it is able to access a file system and, most importantly, the file system is capable of storing information in a synchronous manner, i.e. without buffering. This will be discussed more fully below.

The operation of the invention starts in the box labeled "1". Control proceeds to box "2" where a variable, named "SLOT" is initialized to point at the first slot 26. In general, the algorithm operates by iterating over all slave devices in the system. In the case of the ASX-4000, slave devices equate to system slots 26, hence, the flowchart refers to slots 26.

The first decision is made at the decision point box labeled "3" in the flowchart. The key point here is that once malfunctioning slave devices are removed from the system and are replaced with operational hardware, the persistent state that tracks the operational state of the hardware must be reset. If this were not done, the replaced hardware would continue to be treated as malfunctioning by the invention. If the slot 26 is empty, say because malfunctioning hardware was removed, control passes to the box labeled "10". Here, the slot 26, or in general the slave device, is marked as "absent" by placing an indication in the file system associated with the control processor.

If, at decision point "3", the slot 26 is found to be occupied, then control proceeds to the next decision point in the flowchart, labeled "4". The key point here is to check the file system to see if the slot 26 or slave device has already been judged to be "non operational" prior to the system being restarted. If so, control transfers to box "11", no future attempts are made to access the failed slave device, and appropriate action is taken to notify the operator of the system that a slave device in the system has been taken out of service. Control then passes to box "15" which runs the algorithm on any other unconsidered slave devices in the system. If all slave devices in the system have been tested, then the algorithm terminates normally as indicated by the transfer of control to box "16".

Returning to decision box "4", if the slave device being considered has not been marked as "to be skipped" during a previous invocation of the algorithm because the slave hardware is non-operational, then the algorithm proceeds to test the hardware. The algorithm checks to see if the hardware is marked as "potentially bad" at decision point 7 of the flowchart. If the slave device failed, and failure of a slave device causes the control processor to fail, during a previous invocation of the algorithm, the slave device would have been marked as "potentially bad" in the file system. Any slave devices marked as "potentially bad" in the file system must have caused the system to fail, so these devices are marked as "to be skipped" in box "6" of the flowchart.

However, if, at decision point "4", the hardware was not marked as "potentially bad", then the algorithm attempts to test the hardware by accessing the slave device. First, it marks the device as "potentially bad" in the file system. The method of marking is critical to the functioning of the algorithm. The file system must complete the write operation and have the information stored persistently. BEFORE the device is accessed in box "9". Generally, the way to accomplish this is to invoke some sort of synchronize operation on the file system. For systems based upon Linux or other POSIX compliant operating systems, the fsync() system call accomplishes this. Marconi's implementation of this algorithm in Marconi's ForeThough software uses VxWorks ioctl operation to force synchronization of the entire file system. If the write does not complete before the slave device is accessed, the algorithm cannot recover from non-operational slave devices as the algorithm cannot track the failing slave device across invocations without the completion of this write operation.

Once the system has been marked, as shown in box "8", the system attempts to access the slave device as shown in box "9". If the device is operational, then the slot 26 is marked as good as shown in box "9" and control proceeds to box "14" to enable normal operations on the device and then to box "15" to see of other devices need to be checked.

If, on the other hand, the slave device is not operational, then the system will hang when the control processor attempts to manipulate the slave device. Eventually, hardware watch dog timers will detect that the system has failed and will restart the system. In this case the algorithm restarts and when control transfers to decision point "7", the failed hardware will be detected because of the information left in the file system during the previous invocation of this algorithm. This is how failing hardware is detected and marked as non-operational.

Eventually, all of the slave devices are checked and marked as either operational or non-operational. Once this happens, the algorithm terminates at box "16".

In any master/slave bus 16 devices attached to the bus 16 can be considered as either bus 16 masters or bus 16 slave devices. Master devices have the capability to initiate a transaction across the bus 16, while slave units 14 do not initiate any activity except when requested to do so by a master. In the preferred embodiment, the system control processor is the bus 16 master and all of the portcards act as slave devices.

A transaction on a master/slave bus 16 starts by a master unit 12 making a request of one of the slave units 14. The slave unit 14 either accepts or rejects the request, performs whatever actions it needs to do to satisfy the request, and then returns the result of the request to the master unit 12. Meanwhile, during the time it takes the slave unit 14 to perform the request, the master unit 12, the software program 22, and the system control processor 29, just wait. During this waiting period, the master unit 12, and the entire system 10, is essentially "frozen". Normally, this period is very small, on the order of a millionth of a second.

The problem is that certain hardware faults can cause the slave unit 14 to accept the request, and then fail while processing the request, leaving the master unit 12 and the entire system 10 permanently "frozen". There is hardware in the switch 10, called a watchdog, that detects if the master is frozen for too long and then performs a reset operation on the master unit 12. The phrase "abnormal termination" in the preferred embodiment refers to a bus 16 transaction that is terminated by having the watchdog hardware reset the master device instead of having the bus 16 transaction complete by having the slave device return the transaction result back to the master.

Persistent storage in Marconi's ATM switches such as the ASX-4000 is implemented using a flash file system. This is a solid state device, attached to the processor card, that appears to be a standard formatted file system. Similar devices are used in digital cameras. This store is manipulated by the program running on the processor via the VxWorks operating system's file system routines. The key enabler for the resiliency feature is that VxWorks supports transaction-like processing through some of the VxWorks system calls. This is detailed in the discussion of the flow chart above.

Although the invention has been described in detail in the foregoing embodiments for the purpose of illustration, it is to be understood that such detail is solely for that purpose and that variations can be made therein by those skilled in the art without departing from the scope of the invention except as it may be described by the following claims.

## Claims

1. A method for transferring data comprising the steps of:
attempting to access a slave unit (14) of a plurality of slave units of a switch (10) by a master unit (12) of the switch with a signal through a bus (16) through which the master unit (12) and the slave unit (14) communicate; and
detecting whether or not said slave unit (14) is a failed slave unit;
**characterized by**:
if said slave unit (14) is a failed slave unit, causing the switch (10) to abnormally terminate; and
in response to the switch (10) being caused to abnormally terminate, automatically recovering the switch from the failed slave unit with a software program (22) in the switch that directs the master unit (12) to avoid further accessing the failed slave unit of the plurality of slave units by storing status information relating to the failed slave unit in persistent storage (28) that survives across abnormal termination of the switch, and thereafter preventing the master unit (12) from attempting to access the failed slave unit.

2. A method as described in Claim 1 wherein the recovering step includes the step of obtaining status information about the slave units from said persistent storage (28).

3. A method as described in Claim 2 including the step of changing information in persistent storage (28) associated with the slave unit (14) from identified as failed to identified as good if the switch does not terminate abnormally after the master unit (12) attempts to contact the slave unit (14).

4. A method as described in Claim 3 including the step of setting a variable slot chosen from amongst a plurality of slots (26) of the switch not marked as potentially bad.

5. A method as described in Claim 4 including the step of determining whether the slave unit (14) is physically present in a first slot of the plurality of slots (26).

6. A method as described in Claim 5 including the step of determining the first slot is marked to be skipped.

7. A method as described in Claim 6 including the step of marking the variable slot as potentially bad if it is not marked potentially bad.

8. A method as described in Claim 7 including the step of reporting the variable slot as containing broken hardware and preventing the master unit (12) from attempting to access the variable slot if the variable slot is marked to be skipped.

9. A method as described in Claim 8 including the step of attempting to access hardware present in the variable slot if the variable slot is marked potentially bad.

10. A method as described in Claim 9 including the step of marking the variable slot as good if the switch did not abnormally terminate when the master unit (12) accessed the slave unit.

11. A method as described in Claim 10 including the step of enabling normal operations on hardware present in the variable slot if the variable slot is marked as good.

12. A method as described in Claim 11 including the step of setting the variable slot to a next slot of the plurality of slots.

13. A computer-readable medium storing thereon computer-readable instructions for performing the method according to any one of claims 1 to 12 when said instructions are executed on a computer.

## Patentansprüche

1. Verfahren zum Übertragen von Daten, umfassend die Schritte:
den Versuch, auf eine Slaveeinheit (14) zuzugreifen, die zu einer Anzahl Slaveeinheiten eines Switchs (10) gehört, und zwar durch eine Mastereinheit (12) des Switchs mit einem Signal über einen Bus (16), über den die Mastereinheit (12) und die Slaveeinheit (14) kommunizieren; und
das Feststellen ob die Slaveeinheit (14) eine ausgefallene Slaveeinheit ist;
**dadurch gekennzeichnet, dass**
der Switch (10) veranlasst wird, den Betrieb in einem irregulären Modus zu beenden, falls die Slaveeinheit (14) eine ausgefallene Slaveeinheit ist; und
als Reaktion darauf, dass der Switch (10) veranlasst wird, den Betrieb in einem irregulären Modus zu beenden, das automatische Lösen des Switchs von der ausgefallenen Slaveeinheit mit einem Softwareprogramm (22) in dem Switch, das die Mastereinheit (12) anweist, zukünftig nicht mehr auf die ausgefallene Slaveeinheit der Anzahl Slaveeinheiten zuzugreifen, indem es Statusinformation bezüglich der ausgefallenen Slaveeinheit in einem dauerhaften Speicher (28) ablegt, der ein Betriebsende des Switchs in dem irregulären Modus übersteht, und das anschließend verhindert, dass die Mastereinheit (12) versucht, auf die ausgefallene Slaveeinheit zuzugreifen.

2. Verfahren nach Anspruch 1, worin der Löseschritt den Schritt des Gewinnens von Statusinformation über die Slaveeinheiten aus dem dauerhaften Speicher (28) enthält.

3. Verfahren nach Anspruch 2, das einen Schritt enthält, in dem die Information in dem dauerhaften Speicher (28), die der Slaveeinheit (14) zugeordnet ist, von der Kennzeichnung als fehlerhaft in die Kennzeichnung als funktionstüchtig verändert wird, falls der Switch den Betrieb nicht in einem irregulären Modus beendet, nachdem die Mastereinheit (12) versucht, mit der Slaveeinheit (14) Kontakt aufzunehmen.

4. Verfahren nach Anspruch 3, das einen Schritt enthält, in dem ein variabler Steckplatz, der aus einer Anzahl Steckplätze (26) des Switchs ausgewählt wird, nicht als möglicherweise ausgefallen **gekennzeichnet** wird.

5. Verfahren nach Anspruch 4, das einen Schritt enthält, in dem festgestellt wird, ob die Slaveeinheit (14) in einem ersten Steckplatz der Anzahl Steckplätze (26) körperlich vorhanden ist.

6. Verfahren nach Anspruch 5, das einen Schritt enthält, in dem festgestellt wird, ob der erste Steckplatz dafür markiert ist, übersprungen zu werden.

7. Verfahren nach Anspruch 6, das einen Schritt enthält, in dem der variable Steckplatz als möglicherweise fehlerhaft markiert wird, falls er nicht als möglicherweise fehlerhaft markiert ist.

8. Verfahren nach Anspruch 7, das einen Schritt enthält, in dem gemeldet wird, dass der variable Steckplatz ausgefallene Hardware enthält und die Mastereinheit (12) daran gehindert wird, einen Zugriff auf den variablen Steckplatz zu versuchen, falls der variable Steckplatz dafür markiert ist, übersprungen zu werden.

9. Verfahren nach Anspruch 8, das einen Schritt enthält, in dem versucht wird, auf eine in dem variablen Steckplatz vorhandene Hardware zuzugreifen, falls der variable Steckplatz als möglicherweise fehlerhaft markiert ist.

10. Verfahren nach Anspruch 9, das einen Schritt enthält, in dem der variable Steckplatz als fehlerfrei markiert wird, falls der Switch den Betrieb nicht in einem irregulären Modus beendet hat, als die Mastereinheit (12) auf die Slaveeinheit zugegriffen hat.

11. Verfahren nach Anspruch 10, das einen Schritt enthält, in dem der normale Betriebsablauf auf der in dem variablen Steckplatz vorhandenen Hardware freigegeben wird, falls der variable Steckplatz als fehlerfrei markiert ist.

12. Verfahren nach Anspruch 11, das einen Schritt enthält, in dem der variable Steckplatz auf einen folgenden Steckplatz der Anzahl Steckplätze gesetzt wird.

13. Computerlesbares Medium, auf dem computerlesbare Befehle gespeichert sind, die das Verfahren nach irgendeinem der Ansprüche 1 bis 12 ausführen, wenn die Befehle auf einem Computer abgearbeitet werden.

## Revendications

1. Procédé pour le transfert de données, comprenant les étapes suivantes :
tentatives d'accès à une unité esclave (14) d'une pluralité d'unités esclaves d'un commutateur (10) effectuée par une unité maîtresse (12) du commutateur à l'aide d'un signal passant par un bus (16) grâce auquel l'unité maîtresse (12) et l'unité esclave (14) communiquent ; et
la détection du fait de savoir si oui ou non ladite unité esclave (14) est une unité esclave défaillante ;
**caractérisé par** :
si ladite unité esclave (14) est une unité esclave défaillante, le fait d'amener le commutateur (10) à s'arrêter anormalement ; et
en réponse au fait que le commutateur (10) est amené à s'arrêter anormalement, restaurer automatiquement le commutateur depuis l'unité esclave défaillante à l'aide d'un programme logiciel (22) dans le commutateur, qui ordonne à l'unité maîtresse (12) d'éviter de continuer d'accéder à l'unité esclave défaillante de la pluralité d'unités esclaves en stockant des informations d'état concernant l'unité esclave défaillante dans une zone de stockage persistant (28) qui survit à un arrêt anormal du commutateur et ensuite en empêchant l'unité maîtresse (12) de tenter d'accéder à l'unité esclave défaillante.

2. Procédé selon la revendication 1, dans lequel l'étape de restauration comprend l'étape consistant à obtenir des informations d'état concernant les unités esclaves depuis ladite zone de stockage persistant (28).

3. Procédé selon la revendication 2, comprenant l'étape consistant à modifier des informations contenues dans la zone de stockage persistant (28) associées à l'unité esclave (14) d'un état identifié comme défaillant à un état identifié comme bon si le commutateur ne s'arrête pas anormalement après que l'unité maîtresse (12) a tenté de contacter l'unité esclave (14).

4. Procédé selon la revendication 3, comprenant l'étape consistant à régler un connecteur variable choisi parmi une pluralité de connecteurs (26) du commutateur non marqué comme étant potentiellement défectueux.

5. Procédé selon la revendication 4, comprenant l'étape consistant à déterminer si l'unité esclave (14) est physiquement présente dans un premier connecteur de la pluralité de connecteurs (26).

6. Procédé selon la revendication 5, comprenant l'étape consistant à déterminer que le premier connecteur est marqué comme étant sauté.

7. Procédé selon la revendication 6, comprenant l'étape consistant à marquer le connecteur variable comme étant potentiellement défectueux s'il n'est pas marqué comme étant potentiellement défectueux.

8. Procédé selon la revendication 7, comprenant l'étape consistant à signaler le connecteur variable comme contenant un matériel hors d'usage et à empêcher l'unité maîtresse (12) de tenter d'accéder au connecteur variable si le connecteur variable est marqué comme étant sauté.

9. Procédé selon la revendication 8, comprenant l'étape consistant à tenter d'accéder à un matériel présent dans le connecteur variable si le connecteur variable est marqué comme étant potentiellement défectueux.

10. Procédé selon la revendication 9, comprenant l'étape consistant à marquer le connecteur variable comme étant bon si le commutateur ne s'est pas arrêté anormalement lorsque l'unité maîtresse (12) a accédé à l'unité esclave.

11. Procédé selon la revendication 10, comprenant l'étape consistant à autoriser des opérations normales sur un matériel présent dans le connecteur variable si le connecteur variable est marqué comme étant bon.

12. Procédé selon la revendication 11, comprenant l'étape consistant à régler le connecteur variable à un connecteur suivant de la pluralité de connecteurs.

13. Support lisible par ordinateur stockant sur celui-ci des instructions lisibles par ordinateur pour mettre en oeuvre le procédé selon l'une quelconque des revendications 1 à 12 lorsque lesdites instructions sont exécutées sur un ordinateur.
